# EUROPEAN PATENT APPLICATION

(11) **EP 3 281 570 A1**
(43) Date of publication of application: **14.02.2018**
(21) Application number: 16183743.0
(22) Date of filing: 11.08.2016
(51) Int. Cl.: A47J 31/46, A47J 31/60

(54) **APPARATUS FOR PREPARING A BEVERAGE**

(71) Applicant: Unilever PLC, London, Greater London EC4Y 0DY (GB); Unilever N.V., 3013 AL Rotterdam (NL)
(72) Inventor: NAEFF, Patrik, 9435 Heerbrugg (CH); PODUSEL, Richard Heinz, 9435 Heerbrugg (CH)
(74) Representative: Keenan, Robert Daniel

(57) **Abstract**

An apparatus for preparing a beverage from a capsule, the capsule comprising particulate beverage precursor material, the apparatus comprising a beverage infusion chamber having a chamber inlet for receiving infusion liquid and a chamber outlet for delivering brewed beverage; wherein the infusion chamber outlet has at least three orientations, (a) a first orientation wherein the outlet is blocked, (b) a second orientation where a channel comprising a filter connects the outlet to a beverage delivery location, and (c) a third orientation where a channel not comprising a filter connects the outlet to a beverage waste location.

## Description

### Technical Field

The invention relates to an apparatus for preparing a beverage from a capsule comprising particulate beverage precursor material.

### Background and prior art

Many different designs of device for preparing and dispensing a prepared beverage have been suggested. Some of these operate with the use of single-serve capsules, containing sufficient material to prepare a single beverage serving.

In the majority of cases these capsules contain particulate beverage precursor material which can produce a beverage when brought into contact with hot water, such as coffee, cocoa, tea.

In a common arrangement of apparatus, heated water is injected into the capsule so that infusion occurs within the capsule and a prepared beverage exits the capsule for dispensing to the user.

In another type of apparatus, contained particulate material leaves the capsule before preparing the beverage in a separate brewing chamber.

WO2007/042485 discloses a device for preparing brewed tea from tea leaves in a single serve capsule. The capsule provides the filter for preventing spent tea leaves from passing into the prepared beverage from the infusion chamber. Infusion is followed by a rinsing step wherein waste water passes through the capsule to a waste water storage location.

One problem with such machines is that such capsules are difficult to handle and dispose of in an efficient and sustainable manner as they typically contain residues of solids and left-over water from the infusion process.

Thus, improvements in this area would be desirable.

### Summary of Invention

In a first aspect, the invention relates to an apparatus for preparing a beverage from a capsule, the capsule comprising particulate beverage precursor material, the apparatus comprising a beverage infusion chamber having a chamber inlet for receiving infusion liquid and a chamber outlet for delivering brewed beverage; wherein the infusion chamber outlet has at least three orientations, (a) a first orientation wherein the outlet is blocked, (b) a second orientation where a channel comprising a filter connects the chamber outlet to a beverage delivery location, and (c) a third orientation where a channel not comprising a filter connects the outlet to a beverage waste location.

Thus, the apparatus comprises an infusion chamber that prepares a beverage from infusion liquid and particulate beverage precursor material. The outlet is so arranged to be able to provide the prepared beverage when necessary, and also to provide a waste stream comprising both the waste infusion liquid and beverage precursor material residue to a beverage waste location.

The apparatus preferably comprises a capsule reception location and an infusion liquid flow path, connecting an infusion liquid supply to a chamber inlet of the infusion chamber; wherein the capsule reception location is remote from the infusion liquid flow path, and a channel is provided that connects the capsule reception location to the beverage infusion chamber; there also being provided a transport device for transporting the particulate beverage precursor material from the capsule along the channel and to the infusion chamber.

Thus, the apparatus is arranged to deliver the contents of the capsule to an infusion chamber. Thus the capsule is substantially free of any contained particulate material and is therefore in a more clean and convenient condition to be handled and recycled by the user.

In this way the apparatus operates by allowing for a flow of infusion liquid, e.g. water, wherein there is an infusion liquid flow path for transporting the infusion liquid from a source, e.g. a reservoir, to an inlet of the beverage infusion chamber. Furthermore, the capsule reception location is remote from the infusion liquid flow path. This means that the capsule does not come into contact with the infusion liquid. This provides the advantage that the capsule does not interact or come into contact with the infusion liquid, which further assists in keeping disposal of the capsule hygienic and clean.

Typically the infusion liquid will be water, however other infusion liquids may be envisaged. Preferably the infusion liquid transport channel comprises a reservoir for supplying infusion liquid.

Preferably the infusion liquid flow path comprises a heater to heat infusion liquid, e.g. water, as it travels to the infusion chamber.

The transport device for transporting the particulate beverage precursor material from the capsule along the channel and to the infusion chamber may take a variety of forms. However in a preferred embodiment the transport device comprises (1) a puncturing device for puncturing the capsule to create a capsule inlet into the capsule and a capsule outlet out of the capsule; and (2) a device for directing a flowing gas stream into the capsule through the inlet and out of the capsule through the outlet, so that the particulate beverage precursor material is entrained out of the capsule into the flowing gas stream; and the particulate beverage material being subsequently transported along the channel to deliver the particulate beverage precursor material to the infusion chamber.

Preferably the gas employed to entrain the beverage precursor material from the capsule is air, however other gases may be used to similar effect. The device for directing a flowing gas stream into the capsule may take a variety of forms, however preferably the device comprises a fan.

Preferably the at least three orientations can be provided by a moveable selector, which can be positioned to (a) block the outlet, (b) connect the outlet to a beverage delivery channel and (c) connect the outlet to a beverage waste location.

In a preferred embodiment, the chamber outlet of the infusion chamber is located at the lowest position in use. This has the advantage that the outlet can be used to deliver beverage and/or waste using gravity as a driving force.

As discussed above, the capsule is preferably kept away from the infusion liquid in use and therefore there is also preferably provided a separate capsule waste location which remains free of infusion liquid in use. This keeps the capsule waste location hygienic and convenient to store a number of spent capsules before disposal, e.g. by recycling. Preferably the capsule waste location also remains free of spent particulate beverage material.

It is also preferred that the beverage waste location comprises a chamber having a base and side walls with an upper region and a lower region separated by a filter. This has the effect that the waste water passes through the filter whilst the particulate beverage material is kept on top of the filter. This separation assists further with cleaning and removal of waste by a user.

In a second aspect, the invention relates to a process of preparing a beverage by operating an apparatus according to any one of the preceding claims, the process involving the steps of:
(1) delivering infusion liquid and particulate beverage precursor material to the infusion chamber and preparing a brewed beverage therefrom while the infusion chamber outlet is in its first orientation;
(2) delivering the brewed beverage through the outlet of the infusion chamber while the infusion chamber outlet is in its second orientation;
(3) carrying out a rinsing step wherein infusion liquid is directed inside the infusion chamber while the infusion chamber outlet is in its third orientation.

As discussed above, the apparatus is primarily intended for delivery of a single portion of beverage. As such each capsule generally contains sufficient particulate material for form a single portion of beverage. Thus the internal volume of the capsule is preferably from 10 to 24 cm³.

Thus preferably the volume of infusion liquid, e.g. water, delivered to the infusion chamber in a single infusion is from 150 to 300 ml.

The particulate beverage precursor material may be any infusible or soluble material for preparing a beverage such as dried plant material such as tea particles, coffee particles, cocoa, milk powder and the like. Preferably the particulate beverage precursor material comprises dried plant material, preferably tea particles.

The particulate beverage precursor material preferably has a size (i.e. longest diameter) of from 2 to 10mm, preferably from 3 to 7mm. In particular, at least 75%, preferably at least 90% by weight of the particulate beverage precursor material have a size of from 2 to 10mm, preferably from 3 to 7mm.

The invention will now be illustrated with reference to the following figures, in which:
Figure 1 is a view of an internal group of components for use in a beverage machine.
Figure 2 is a view of the internal group showing the capsule pierced and air blowing the tea particles out of the capsule to the infusion chamber.
Figure 3 is a view of the internal group of components after the particulate material has been delivered to the infusion chamber.
Figure 4 is a side sectional view of the infusion chamber and the arrangement of the outlet thereof.

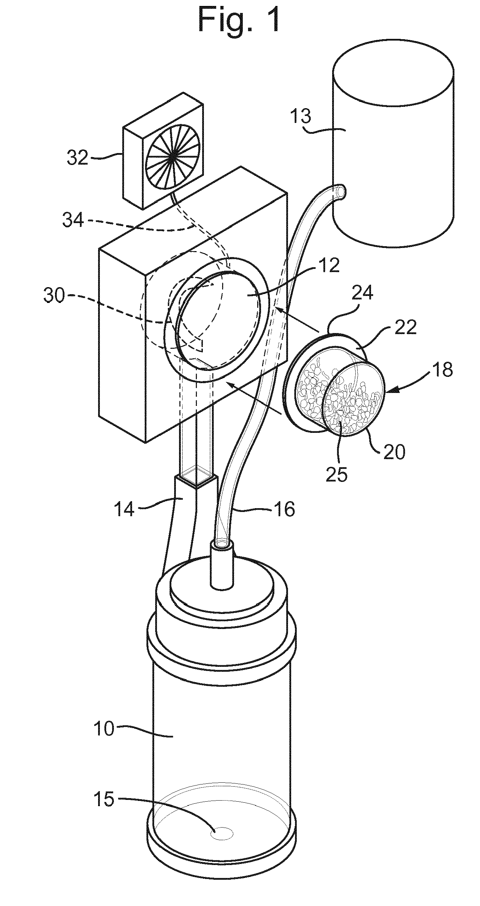

Turning to the figures, figure 1 shows a group of internal components for use in a beverage machine. The group comprises an infusion chamber **10**, a capsule reception location **12**, and a channel **14** connecting the capsule reception location **12** with the infusion chamber **10**. There is also provided a water reservoir **13** and a water inlet conduit **16** for delivering water from the reservoir to the infusion chamber **10**. Although not shown in the figures, the conduit 16 could comprise a water heater, such as an in-line water heater, or the water in the reservoir could be heated. The infusion chamber has a filtered outlet **15**, actuatable to deliver a brewed beverage from the infusion chamber **10**, and will be discussed in greater detail below.

As can be seen, the capsule **18** is remote from the infusion liquid flow path **13**, **16**, **10**.

The apparatus further comprises an arcuate piercer **30** arranged to rotate about a horizontal axis. An air fan **32** is provided together with a conduit **34** for transporting a flowing stream of air from the fan **32** to the capsule reception location **12**.

A capsule **18** is also shown before arriving at the capsule reception location **12**.

The capsule comprises a transparent plastic body **20** having a rim **22** and covered in a foil lid **24.** The capsule contains tea particles **25,** loosely contained within the capsule **18.**

In use, the capsule is inserted into the beverage machine and it is directed towards the capsule reception location **12.**

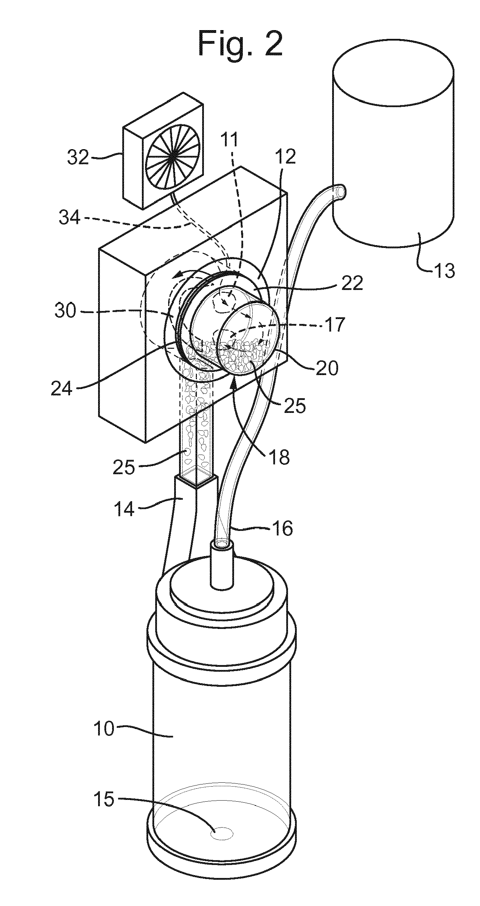

As best seen in figure 2, once in place at the capsule reception location **12** the apparatus rotates the arcuate piercer **30** so that it punctures the foil lid **24** of the capsule **18** to form an inlet **11** into the capsule at an upper region of the lid **24.** As the arcuate piercer **30** continues to rotate, the piercer **30** travels within the body of the capsule and punctures the foil lid **24** again as it rotates further, forming an outlet **17** from the capsule in a lower region of the foil lid **24** by exiting the lid **24** from the inside of the capsule. Once formed the rotational movement of the piercer is reversed to withdraw the piercer **30** to its starting position.

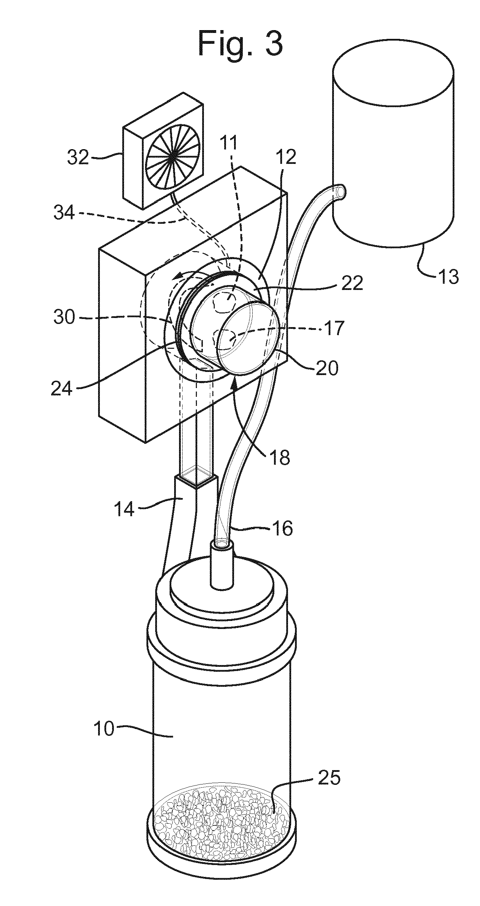

After the inlet **11** and outlet **17** have been formed, the apparatus then engages the air fan **32** which directs a stream of air along conduit **34** into the inlet **11.** Air thus flows inside the capsule **18** and is forced out of the capsule via outlet **17.** As a result of the flow of air within the capsule, the tea particles become entrained in the stream of air and are dragged out of the capsule **18** along with the air stream out of outlet **17.** The air stream and the entrained tea particles then pass down channel **14,** as can be seen in figure 3.

The tea particles **25** then pass into infusion chamber **10** whereupon the air fan **32** is stopped.

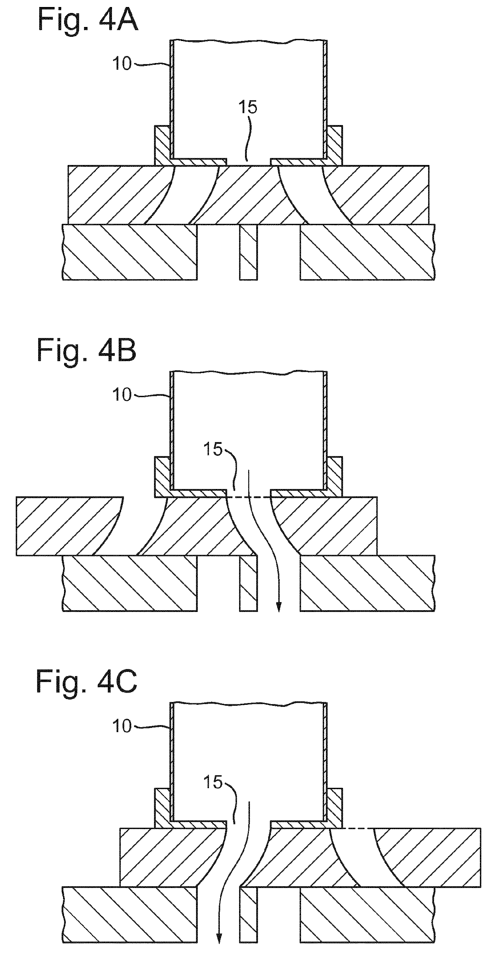

Figures 4A to 4C show a side sectional view of the detail of the arrangement of the outlet **15** of the infusion chamber **10.** Shown is base **40** which comprises two channels, a first channel **42** leading to a beverage delivery point, and a second channel **44** leading to a beverage waste region. Positioned between the block **40** and the infusion chamber **10** is a moveable selector **46** which comprises two channels, a first channel **30** and a second channel **50.** Second channel **50** has a filter **36** positioned at its uppermost region.

Figures 4A to 4C show three possible states that the outlet **15** can be in. Initially the outlet is in the state shown in Figure 4A, wherein the outlet **15** is blocked by moveable selector **46** and neither of channels **42**, **44** communicate with channels **48**, **50**. This prevents any particulates from leaving the infusion chamber **10.**

Whilst the outlet **15** remains blocked, heated water from a reservoir **13** is then passed through inlet **16** to the infusion chamber, whereupon the tea particles **25** are infused to form a beverage.

Once the beverage has been formed, the selector **46** is moved to the position shown in figure 4B, aligning channel **48** with both the outlet **15** and channel **42** to allow the beverage to be dispensed through dispensing channel **42** for consumption. As the channel **48** comprises a filter **36** at the uppermost end, the particulate material remains in the infusion chamber **10.**

Once the beverage has been dispensed, the selector **46** is moved to the position shown in figure 4A once again to block the outlet **15.** This time infusion liquid, which may not be heated, is introduced into the infusion chamber to act as a rinse.

Once sufficient rinse water has built up in the infusion chamber **10** the selector **46** is moved to the position shown in figure 4C aligning channel **50** with both the outlet **15** and the waste channel **44.** This has the effect of the rinse water and particulate material to flow out of waste channel **34** to a waste container (not shown).

The capsule **18** is then ejected to a separate waste compartment, which only contains dry, empty capsules, which can easily be emptied to provide a clean and hygienic disposal of the capsules.

## Claims

1. An apparatus for preparing a beverage from a capsule, the capsule comprising particulate beverage precursor material, the apparatus comprising a beverage infusion chamber having a chamber inlet for receiving infusion liquid and a chamber outlet for delivering brewed beverage; wherein the infusion chamber outlet has at least three orientations, (a) a first orientation wherein the outlet is blocked, (b) a second orientation where a channel comprising a filter connects the outlet to a beverage delivery location, and (c) a third orientation where a channel not comprising a filter connects the outlet to a beverage waste location.

2. An apparatus according to claim 1, wherein the apparatus comprises a capsule reception location and an infusion liquid flow path, connecting an infusion liquid supply to a chamber inlet of the infusion chamber; wherein the capsule reception location is remote from the infusion liquid flow path, and a channel is provided that connects the capsule reception location to the beverage infusion chamber; there also being provided a transport device for transporting the particulate beverage precursor material from the capsule along the channel and to the infusion chamber.

3. An apparatus according to claim 2, wherein the transport device comprises (1) a puncturing device for puncturing the capsule to create a capsule inlet into the capsule and a capsule outlet out of the capsule; and (2) a device for directing a flowing gas stream into the capsule through the inlet and out of the capsule through the outlet, so that the particulate beverage precursor material is entrained out of the capsule into the flowing gas stream; and the particulate beverage material being subsequently transported along the channel to deliver the particulate beverage precursor material to the infusion chamber.

4. An apparatus according to any one of the preceding claims, wherein the infusion liquid supply comprises a reservoir for supplying infusion liquid.

5. An apparatus according to any one of the preceding claims, wherein the three orientations are provided by a moveable selector, which can be positioned to (a) block the outlet, (b) connect the outlet to a beverage delivery location and (c) connect the outlet to a beverage waste location.

6. An apparatus according to any one of the preceding claims, wherein the outlet to the infusion chamber is located at the lowest position in the infusion chamber in use.

7. An apparatus according to any one of the preceding claims, wherein there is also provided a separate capsule waste location which remains free of infusion liquid, and preferably free of particulate beverage material, in use.

8. An apparatus according to any one of the preceding claims, wherein the beverage waste location comprises a chamber having a base and side walls with an upper region and a lower region separated by a filter.

9. An apparatus according to any one of the preceding claims, adapted to deliver a volume of infusion liquid to the infusion chamber in a single infusion of from 150 to 300 ml.

10. An apparatus according to any one of the preceding claims, which is adapted to receive a capsule with an internal volume of from 10 to 24 cm³.

11. An apparatus according to any one of the preceding claims, wherein the particulate beverage precursor material comprises dried plant material, preferably tea particles.

12. A process of preparing a beverage by operating an apparatus according to any one of the preceding claims, the process involving the steps of:
(1) delivering infusion liquid and particulate beverage precursor material to the infusion chamber and preparing a brewed beverage therefrom while the infusion chamber outlet is in its first orientation;
(2) delivering the brewed beverage through the outlet of the infusion chamber while the infusion chamber outlet is in its second orientation;
(3) carrying out a rinsing step wherein infusion liquid is directed inside the infusion chamber while the infusion chamber outlet is in its third orientation.

13. A process according to claim 12, wherein in the rinsing step (3) the infusion chamber is initially in its first orientation as rinse water accumulates in the infusion chamber, followed by the infusion chamber adopting its third orientation, to deposit the rinse water and particulate beverage material to the beverage waste location.
